# EUROPEAN PATENT APPLICATION

(11) **EP 4 681 582 A1**
(43) Date of publication of application: **21.01.2026**
(21) Application number: 23934232.2
(22) Date of filing: 18.12.2023
(51) Int. Cl.: A47J 31/44, A47J 31/06, B65D 85/804

(54) **APPARATUS FOR DEFORMING SHAPE OF CAPSULE AND METHOD FOR DEFORMING SHAPE OF CAPSULE BY USING SAME**

(30) Priority: 18.04.2023 KR 20230050640
(71) Applicant: Dongsuh Foods Corporation, Incheon 21314 (KR)
(72) Inventor: KIM, Min Soo, Bucheon-si Gyeonggi-do 14506 (KR); KIM, Young Jin, Anyang-si Gyeonggi-do 13916 (KR); PARK, Chang Jin, Goyang-si Gyeonggi-do 10394 (KR); CHA, Young Joon, Incheon 21332 (KR)
(74) Representative: AWA Sweden AB
(86) International application number: PCT/KR2023/020908
(87) International publication number: WO 2024/219587

(57) **Abstract**

The present disclosure relates to an apparatus for deforming the shape of a capsule so as to produce a high-quality beverage by deforming the shape of the capsule before a beverage preparation capsule is inserted into a beverage preparation apparatus, and to a method for deforming a shape of a capsule using the same.

## Description

### [Technical Field]

The present invention relates to an apparatus for deforming a shape of a capsule and a method for deforming a shape of a capsule using the same, and more particularly, to an apparatus for deforming a shape of a capsule so as to produce a high-quality beverage by deforming the shape of the capsule before the capsule is inserted into a beverage preparation apparatus, and a method for deforming a shape of a capsule using the same.

### [Background Art]

Capsule coffee is designed to be extracted by putting a dedicated capsule containing ground coffee in an amount of one cup into an extraction machine dedicated to capsule coffee, wherein the capsule is sealed such that the ground coffee beans therein are not oxidized, thereby solving a problem of oxidation that may occur during storage after grinding, and refers to coffee thus prepared.

Since capsule coffee was first launched in the European market in the 1980s, it has steadily gained popularity from consumers, and due to its convenience, capsules sealing products that do not contain coffee, such as ice tea, hot chocolate, lemon tea, powdered milk, carbonated beverages, fruit beverages, and the like, have also been developed in various ways.

These capsules are stored and distributed in a sealed state such that contact between substances inside the capsule and oxygen is shut off to preserve a flavor of the material and extend its shelf life. For example, as disclosed in International Patent Publication No. WO 1986/002537, coffee capsules may be hermetically sealed under a vacuum.

However, in some of the beverages, for example roasted coffee, gas may dissipate when stored in the capsule, which may cause the sealing of the capsule to be damaged during storage. Therefore, in order to avoid this, after roasting the coffee, a degassing step is performed in which gas is released for a certain period of time before packaging the coffee in the capsule.

However, even if the sealing is performed after sufficiently releasing gas of a substance for preparing a beverage such as coffee, a small amount of gas is released during storage and distribution of the capsule, and since the material of a capsule body and/or a cover is configured to have some flexibility, the capsule is not damaged by the gas release, but its internal volume is increased.

Due to the flexibility of the capsule material, it is possible to prevent the capsule sealing from being damaged during storage and distribution of the capsule, but the increase in the internal space of the capsule results in a change in the density and uniform distribution of the material inside the capsule that were intended during manufacture. The non-uniform distribution of the material inside the capsule not only changes a physical property and a yield of the beverage intended at the time of manufacture of the capsule, but also causes the quality of the prepared beverage to be non-uniform or requires more time to extract a target concentration of the beverage.

In order to solve such problems, the inventors of the present invention, through prior research, developed a capsule and an apparatus configured such that a beverage is extracted after the shape of the capsule is deformed by pressurization, thereby removing an empty space inside the capsule and allowing the beverage to be extracted while the substance inside the capsule is uniformly distributed (see Korean Patent Nos. 10-2353311, 10-2353312, etc.).

However, although such a method has an advantage of being able to extract a high-quality beverage, there is a limitation that it is necessary to be equipped with a beverage preparation apparatus capable of deforming the shape of the capsule, so that consumers having conventional general beverage preparation apparatuses had a burden of purchasing a new beverage preparation apparatus. Even if a beverage preparation apparatus capable of deforming the shape of the capsule is purchased, when such a beverage preparation apparatus lacks compatibility with the capsule, there was a limitation in applying this technology to various capsules.

In addition, when the capsule is bent or damaged during distribution, the capsule may not be inserted into the beverage preparation apparatus, or even if inserted, the beverage may not be properly extracted, so that capsules with contents not damaged could not be used and had to be discarded.

The inventors of the present invention, after continuing research once again for deforming the shape of the capsule, have found that by deforming the shape of the capsule in advance before inserting the capsule into a beverage preparation apparatus, it is possible not only to obtain a high-quality beverage even in a beverage preparation apparatus without a shape-deforming function, but also to restore a capsule whose external shape has been deformed, thereby completing the present invention.

### [Disclosure]

### [Technical Problem]

It is an object of the present disclosure to provide an apparatus for deforming the shape of a capsule.

It is another object of the present disclosure to provide a set for deforming the shape of a capsule comprising a capsule shape-deforming apparatus and a holder.

It is still another object of the present disclosure to provide a method for deforming the shape of a capsule using the apparatus for deforming the shape of a capsule.

### [Technical Solution]

In order to achieve the objects as described above, the present disclosure provides an apparatus for deforming the shape of a capsule comprising a main body having a space therein in which a chamber can be accommodated and having an opening formed therein; a chamber, which is arranged to be movable in an axial direction while partially inserted through the opening of the body, having a capsule insertion port formed to insert and accommodate at least a part of the capsule, and an insertion hole into which a support member can be inserted; a support member protruding inside the main body and extending to the inside of the chamber; and a shape-deforming member formed at a distal end of the support member for deforming the shape of the capsule by pressurizing the capsule.

The apparatus for deforming the shape of a capsule of the present disclosure may be for deforming the shape of the capsule in advance before the capsule is inserted into a beverage preparation apparatus.

In the present disclosure, the main body may comprise a pressing part that can be pressed by a user, and the capsule may be pressurized by a force with which the user presses the main body.

In the present disclosure, an inner surface of the chamber may comprise a capsule support part having an inner diameter that gradually decreases.

In the present disclosure, the shape-deforming member may comprise a protrusion or a recess.

In the present disclosure, the shape-deforming member may comprise a perforating member for forming a hole in the capsule.

In the present disclosure, the shape-deforming member may comprise an elastic material.

The apparatus of the present disclosure may further comprise an elastic member between the main body and the chamber.

In the present disclosure, it is preferable that the elastic member exerts an elastic force in a direction in which a distance between the main body and the chamber becomes larger.

In the present disclosure, it is preferable that the deformation of the shape is a deformation in a direction in which a volume inside the capsule is reduced.

In the present disclosure, the deformation of the shape may reduce a volume inside the capsule by 1 to 20%.

In the present disclosure, it is preferable that the deformation of the shape is made such that only a shape of a bottom part of the capsule is deformed while a shape of a side wall part of the capsule is maintained.

The apparatus for deforming the shape of a capsule of the present disclosure may further comprise a holder having a groove corresponding to a size of the capsule insertion port, wherein the apparatus for deforming the shape of a capsule can be mounted on the groove.

In the present disclosure, an inner side of the main body (100) may be provided with a groove-shaped guide, and an outer surface of the chamber (200) may be provided with a protrusion configured to be movable along the guide.

Alternatively, in the present disclosure, an inner side of the main body (100) may be provided with a protrusion, and an outer surface of the chamber (200) may be provided with a groove-shaped guide in which the protrusion is inserted so as to be movably disposed.

The present disclosure also provides a method for deforming the shape of a capsule comprising the steps of providing a capsule; inserting the capsule into a capsule insertion port of an apparatus for deforming the shape of a capsule; and pressing the main body of the apparatus to cause the shape-deforming member to pressurize the capsule, thereby deforming the shape of the capsule.

The present disclosure also provides a set for deforming the shape of a capsule comprising an apparatus for deforming the shape of a capsule for deforming a shape of a capsule before the capsule is inserted into a beverage preparation apparatus; and a holder on which the apparatus for deforming the shape of a capsule can be mounted.

In the present disclosure, the holder may comprise a groove for mounting the apparatus for deforming the shape of a capsule.

In the present disclosure, the holder may further comprise a capsule groove for storing capsules.

### [Advantageous Effects]

According to the present disclosure, it is possible to solve problems in which an internal volume of a conventional capsule for preparing a beverage is increased due to gas generation and a distribution of a substance for preparing the beverage becomes non-uniform, and by deforming the shape of the capsule before the capsule is inserted into a beverage preparation apparatus, an empty space inside the capsule can be removed and the substance for preparing the beverage can be uniformly distributed at a constant height. Accordingly, the present disclosure not only provides a beverage of uniform quality through more constant extraction time and extraction concentration, but also allows more coffee solids to be extracted even when the same amount of beverage is extracted, and since extraction can be performed in a shorter time even when extracted at the same concentration, a beverage having superior sensuality can be provided. In addition, even when a large-capacity capsule is used, the present disclosure has an effect of being able to prepare a beverage having uniform extraction quality and excellent sensuality.

Further, even if there is no beverage preparation apparatus capable of deforming the shape of the capsule, the shape of the capsule can be deformed in advance and then the beverage can be extracted, thereby providing an advantage that there is no need to purchase a separate beverage preparation apparatus to obtain a high-quality beverage.

Furthermore, when the apparatus for deforming the shape of a capsule of the present disclosure is used, it is possible to restore an external shape of a capsule, which has been bent or damaged during distribution and thus difficult to use, to a usable level.

### [Description of Drawings]

FIG. 1 is a perspective view showing an exemplary shape of a capsule.
FIG. 2 shows a change in an internal state of the capsule during storage and transportation of the capsule.
FIG. 3 shows an internal state of the capsule after deforming a shape of the capsule.
FIG. 4 is a perspective view of an apparatus for deforming the shape of a capsule according to an embodiment of the present disclosure.
FIG. 5 sequentially shows a method for deforming a shape of a capsule using the apparatus for deforming the shape of a capsule of the present disclosure.
FIG. 6 is a cross-sectional view of the apparatus for deforming the shape of a capsule of the present disclosure.
FIG. 7 is an exploded cross-sectional view of the apparatus for deforming the shape of a capsule of the present disclosure.
FIG. 8 is a cross-sectional view before deforming a shape of the capsule after inserting the capsule into a chamber.
FIG. 9 is a cross-sectional view after deforming a shape of the capsule by pressing a main body after inserting the capsule into the chamber.
FIG. 10 is an image showing appearances of the capsule before and after a shape of the capsule is deformed using the apparatus for deforming the shape of a capsule of the present disclosure.
FIG. 11 is an image showing a process of restoring an external shape of a capsule whose external shape has been damaged, using the apparatus for deforming a shape of a capsule of the present disclosure.
FIG. 12 is an image of an apparatus for deforming the shape of a capsule and a holder according to an embodiment of the present disclosure.
FIG. 13 is an image of an apparatus for deforming the shape of a capsule and a holder according to another embodiment of the present disclosure.

### [Best Mode for Invention]

Hereinafter, specific embodiments of the present disclosure will be described in more detail. Unless defined otherwise, all technical and scientific terms used in this specification have the same meanings as commonly understood by those skilled in the art to which the present disclosure pertains. In general, the nomenclature used in this specification is well known and commonly used in the relevant art.

The present disclosure relates to an apparatus for deforming a shape of a capsule, and more particularly, to an apparatus for deforming the shape of a capsule for deforming the shape of a capsule before the capsule is inserted into a beverage preparation apparatus so as to produce a high-quality beverage, and a method for deforming a shape of a capsule using the same.

In the present disclosure, the term "capsule" refers to a container in which a substance for preparing a beverage is stored and which is put into a beverage preparation apparatus to prepare the beverage, and may be used interchangeably with terms such as "pod," "cartridge," and "packet."

In order to prepare a beverage, the capsule is inserted into the beverage preparation apparatus, and when the beverage preparation apparatus is operated, a liquid is introduced into the capsule to interact with a substance stored in the capsule so that the beverage is prepared, and the prepared beverage is extracted outside the capsule so that a consumer can drink it.

A substance accommodated inside the capsule may be various substances capable of interacting with a liquid to prepare a beverage, and may be in a powder or liquid form, but in order to be used in the apparatus of the present disclosure, the powder is more preferable. The substance may be, for example, coffee, powdered milk, cocoa, tea, soup, porridge, carbonated beverage, fruit beverage, or any combination thereof.

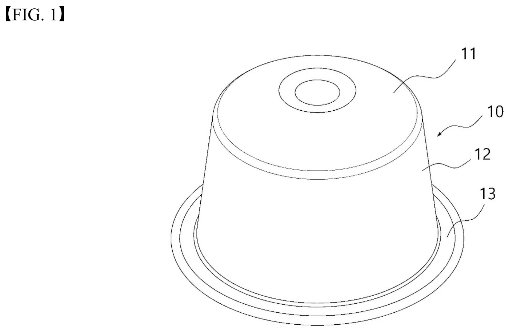

FIG. 1 is a perspective view showing an exemplary shape of a capsule.

In general, the capsule comprises a capsule body (10), which is a bell-shaped container for accommodating a substance for preparing a beverage therein, and a cover for sealing an opening of the capsule body (10). The capsule body (10) forms a container shape into which the substance can be accommodated by a bottom part (11) and a side wall part (12), and comprises a flange (13) extending in an outer direction of the capsule from a lower end of the side wall part (12).

A shape of the bottom part (11) may be configured in various ways, but is mostly a truncated conical shape or a hemispherical shape, and the truncated conical shape or the hemispherical shape may further comprise some protrusions or intaglios. For example, the bottom part (11) may comprise a flat part such that the capsule can be easily erected when the capsule is placed with the bottom part facing downwards.

In order to prepare a beverage using the capsule, a liquid must be injected into the capsule, and at this time, an aperture or a hole is perforated in the capsule so that the liquid is injected. A position where the hole is formed in the capsule is mainly divided into the bottom part (11) or the cover, and in the present disclosure, a capsule of a type in which an aperture or a hole is perforated in the bottom part (11) to inject the liquid may be used.

However, such a capsule has problems in that, during storage and distribution, gas is generated inside the capsule or beverage powder is rearranged, thereby reducing beverage extraction yield, making beverage quality non-uniform, or deteriorating flavor.

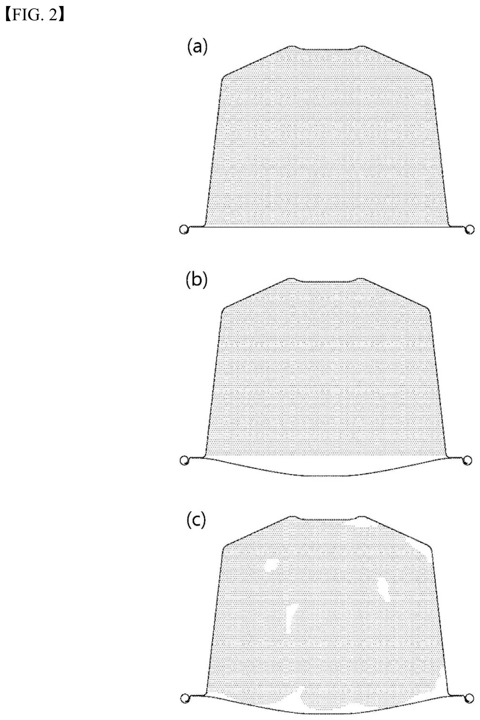

Specifically, FIG. 2 shows a change in an internal state of the capsule during storage and transportation of the capsule. As shown in FIG. 2(a), in a state immediately after manufacture, a substance for preparing a beverage is filled inside the capsule without any empty space. However, in the case where the capsule contains a substance for preparing a beverage, in particular roasted coffee beans, gas such as carbon dioxide is discharged from the substance, so that, as shown in FIG. 2(b), the capsule cover (20) swells and an empty space is formed. In this way, when the capsule with the swollen cover is transported or moved by a consumer, the substance inside the capsule moves to the empty space, whereby the capsule has a density and a non-uniform distribution different from the density and uniform distribution intended at the time of initial manufacture, as shown in FIG. 2(c). Such non-uniformity and density variation of the material inside the capsule adversely affect the quality, flow rate, concentration, and extraction time of the prepared beverage. Such a phenomenon may occur in the same manner not only due to gas generation inside the capsule but also due to an empty space intentionally or unintentionally created during a filling process of the capsule.

In order to solve such problems, the inventors of the present disclosure, through prior research, configured a capsule body (10) such that its shape is deformed by pressurization and then a beverage is extracted, thereby removing an empty space inside the capsule and allowing the beverage to be extracted while a substance inside the capsule is uniformly distributed.

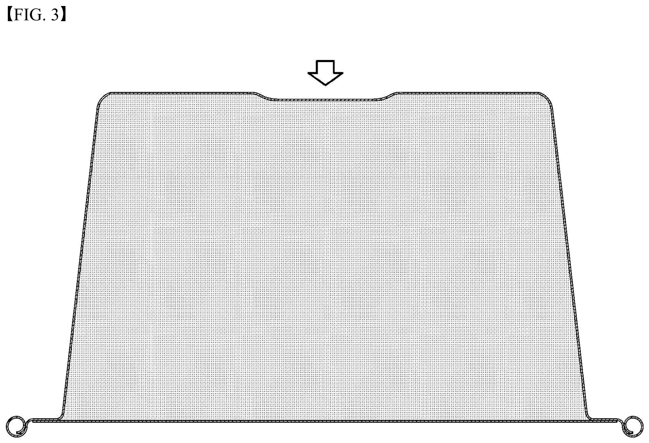

For example, as shown in FIG. 2(c), when the substance is non-uniformly distributed as an internal space of the capsule increases, if the bottom part (11) of the capsule is pressurized so that the bottom part (11) is deformed toward the interior of the capsule as shown in FIG. 3, the internal space of the capsule is reduced, whereby the empty space is removed and the substance inside is pressurized so that the non-uniformly distributed substance is rearranged into a uniform distribution with high density. In addition, the substance for preparing the beverage is arranged at a constant height by pressurization. In the prior research of the inventors, it was confirmed that, when the beverage was extracted after deforming the capsule to rearrange the internal substance in this way, the quality of the beverage was uniform, a relatively large amount of solids could be extracted, and the time required to extract the target beverage concentration could be shortened.

Specifically, as the substance inside the capsule is uniformly compacted, a channeling phenomenon that may occur during a flow of water passing through the interior of the capsule can be minimized, and an appropriate extraction pressure is formed inside the capsule, thereby improving extraction force. In addition, since the substance for preparing the beverage is rearranged densely, even portions that were not extracted by conventional methods can be extracted, so that the intensity of taste and aroma is expressed more strongly, whereby it is more suitable for realizing an original beverage taste intended in the development stage and can provide a beverage having improved sensual characteristics.

However, although such a method has an advantage of being able to extract a high-quality beverage, there is a limitation in that it is necessary to be equipped with a beverage preparation apparatus capable of deforming a shape of the capsule, so that consumers having conventional general beverage preparation apparatuses were burdened with purchasing a new beverage preparation apparatus, and even if a beverage preparation apparatus capable of deforming the shape of the capsule was purchased, when such a beverage preparation apparatus lacked compatibility with the capsule, there was a limitation in applying this technology to various capsules.

In addition, when the capsule was bent or damaged during distribution, the capsule could not be inserted into the beverage preparation apparatus, or even if inserted, the beverage could not be properly extracted, so that capsules with contents not damaged could not be used and had to be discarded.

Accordingly, as a result of further continuing research on deforming the shape of the capsule, the inventors of the present disclosure developed an apparatus capable of deforming the shape of the capsule in advance before the capsule is inserted into a beverage preparation apparatus, thereby not only obtaining a high-quality beverage even in a beverage preparation apparatus without a shape-deforming function, but also enabling the capsule with a deformed external shape to be restored and used.

In this aspect, the present disclosure relates to an apparatus capable of deforming a shape of a capsule in advance before the capsule is inserted into a beverage preparation apparatus.

An apparatus for deforming the shape of a capsule according to the present disclosure comprises a main body having a space therein in which a chamber can be accommodated and having an opening formed therein; a chamber, which is arranged to be movable in an axial direction while partially inserted through the opening of the body, having a capsule insertion port formed to insert and accommodate at least a part of the capsule, and an insertion hole into which a support member can be inserted, and comprising an insertion hole into which a support member can be inserted; a support member protruding inside the main body and extending to the inside of the chamber; and a shape-deforming member formed at a distal end of the support member for pressurizing the capsule.

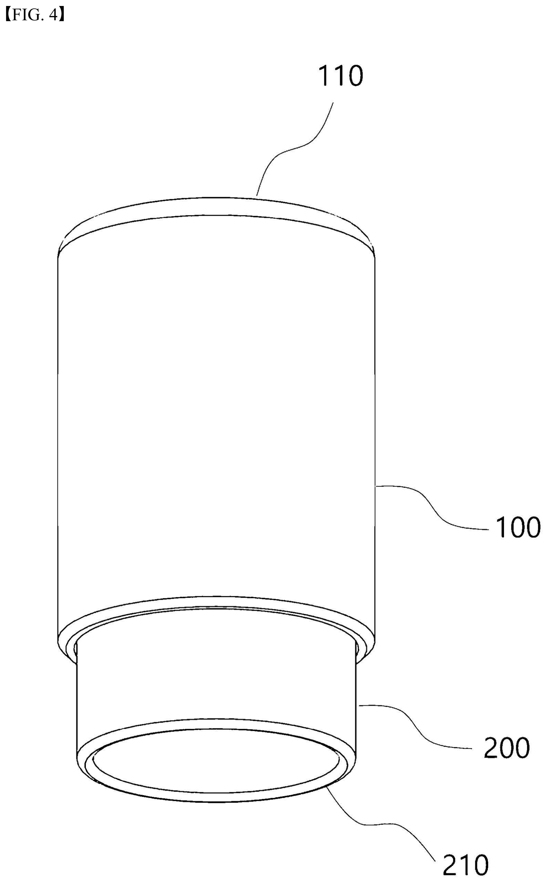

FIG. 4 is a perspective view of an apparatus for deforming the shape of a capsule according to an embodiment of the present disclosure. The apparatus for deforming the shape of a capsule of the present disclosure is small in size so that it is convenient to carry, is easy to manufacture because its structure is not complicated, and has a feature that anyone can easily and quickly deform the shape of a capsule without any special skill.

As shown in FIG. 4, the apparatus for deforming the shape of a capsule of the present disclosure comprises a main body (100) and a chamber (200) having a part inserted into the main body (100). The chamber (200) is installed so as to be movable in an axial direction in a state where a part thereof is inserted into the main body (100), and has a capsule insertion port (210) at one end into which a capsule can be inserted.

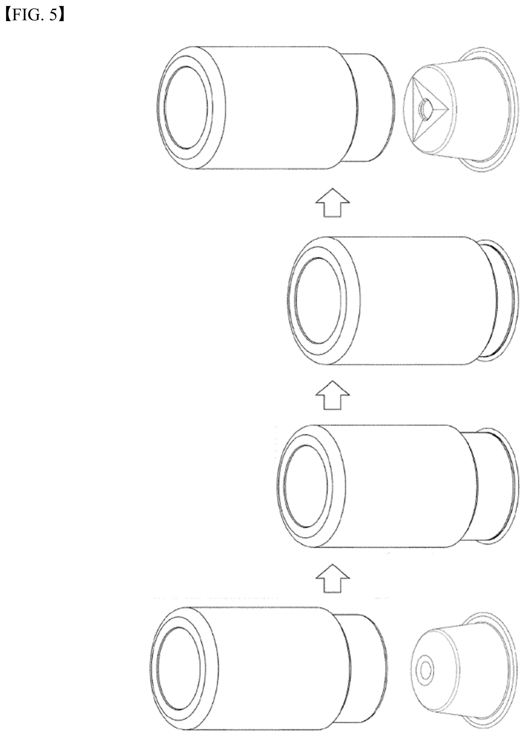

FIG. 5 illustrates an exemplary method for deforming a shape of a capsule using the apparatus for deforming the shape of a capsule according to an embodiment of the present disclosure.

First, the capsule is positioned so that its cover faces downward, and the apparatus for deforming the shape of a capsule of the present disclosure is placed over the capsule so that the capsule is inserted into the capsule insertion port (210) of the chamber (200). Then, when a pressing part (110) of the main body (100) is pressed, the chamber (200) is further inserted into the inside of the main body (100), and a shape-deforming member located inside the chamber (200) pressurizes a bottom part of the capsule to deform the shape of the capsule.

Hereinafter, each component of the apparatus for deforming the shape of a capsule of the present disclosure will be described in more detail.

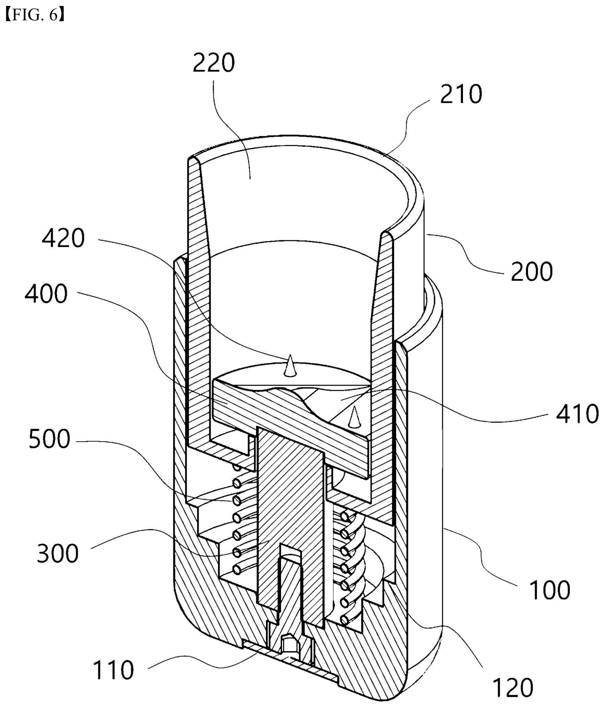

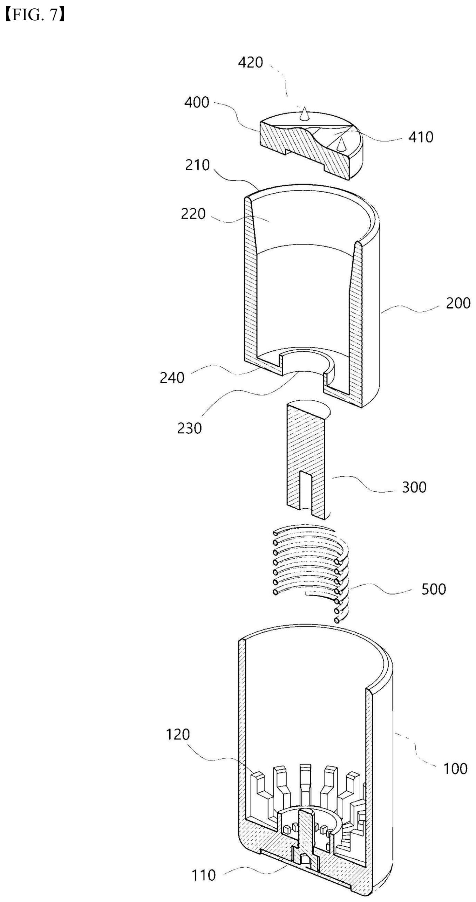

FIG. 6 is a cross-sectional view of the apparatus for deforming the shape of a capsule of the present disclosure, and FIG. 7 is an exploded cross-sectional view of the apparatus for deforming the shape of a capsule of the present disclosure.

First, the main body (100) has a space therein in which a chamber (200) can be accommodated, and an opening is formed at one end so that the chamber (200) can be inserted. In a preferred embodiment of the present disclosure, the main body (100) may have a cylindrical shape with one end closed.

An opposite end of the main body (100) where the opening is formed is provided with a pressing part (110) so that a user can press the main body (100). A shape of the pressing part (110) is not particularly limited as long as the consumer can easily press it, and preferably may have a flat shape. The pressing part (110) may be provided as a separate component, or may be configured as a part of the main body (100) integrally connected thereto.

An inner side of the main body (100) may be provided with a groove-shaped guide (not shown) so that the chamber (200) can move along a predetermined path, and an outer surface of the chamber (200) may also be provided with a protrusion so as to be movable along the guide. Alternatively, the outer surface of the chamber (200) may be provided with a groove-shaped guide, and the inner side of the main body (100) may be provided with a protrusion.

In addition, at least one stoppers (120) may be provided at a bottom part inside the main body (100) to prevent the chamber (200) from excessively moving inward when the chamber (200) moves inside the main body (100).

In the present disclosure, the chamber (200) is positioned with a part thereof inserted into the main body (100) through the opening of the main body (100), and in this state, is installed so as to be movable in an axial direction inside the main body (100).

In the present disclosure, the term "axial movement" means that when the main body (100) and the chamber (200) have a shape with a central axis, such as a cylindrical shape, and share the axis, the chamber moves inward or outward of the main body along the axial direction.

In a preferred embodiment of the present disclosure, the chamber (200) may have a cylindrical shape with one end closed.

One end of the chamber (200) is provided with a capsule insertion port (210), through which at least a part of a capsule is inserted into the chamber (200) and accommodated therein. At this time, a size of the capsule insertion port (210) may be configured to correspond to a size of a flange of a capsule to be mainly used, or may be configured to be larger.

In a preferred mode of use, as shown in FIG. 5, when the size of the capsule insertion port (210) corresponds to the size of the flange of the capsule, the capsule insertion port (210) presses the flange and fixes it, thereby enabling the shape of the capsule to be stably deformed.

However, even if the size of the capsule insertion port (210) is larger than the size of the flange of the capsule, it is also an embodiment of the present disclosure to deform the shape of the capsule by completely inserting the capsule into the chamber (200) while placing the capsule on the floor.

An inner surface adjacent to the capsule insertion port (210) of the chamber (200) may be provided with a capsule support part (220) having an inner diameter that gradually decreases. The capsule support part (220) corresponds to a shape of a side wall part of the capsule, and can prevent the capsule from moving inside the chamber (200) during a pressing process and dispersing force without being properly pressed. In particular, when the size of the capsule flange is smaller than the size of the capsule insertion port (210) and the capsule is inserted into the chamber (200) without being pressed by the capsule insertion port (210), the capsule support part (220) may serve to fix such a small capsule so that it does not shake during the pressing process.

An opposite side of the chamber (200) where the capsule insertion port (210) is not formed is provided with an insertion hole (230) into which a support member (300) described later can be inserted into the chamber (200). The insertion hole (230) may be freely configured depending on a shape of the support member (300), and is preferably formed at a center of a chamber bottom part (240) of the chamber (200) so that a force by a user's pressing can be well delivered to the capsule.

Meanwhile, the apparatus for deforming the shape of a capsule of the present disclosure comprises a support member (300) protrudingly formed inside the main body (100) and extending into the chamber (200) through the insertion hole (230) of the chamber (200).

A connecting position and a shape of the support member (300) may be freely configured as needed, and in terms of directly transmitting a force by the user's pressing to the capsule, it is preferable that the support member (300) protrudes from a central part inside the main body (100) and extends in the axial direction. In a preferred embodiment of the present disclosure, the support member (300) may have a cylindrical shape.

A method in which the support member (300) is connected to the main body (100) may be variously configured, for example, by being formed of one connected material or by being connected by another connecting member.

In the present disclosure, the support member (300) extends into the chamber (200), and a shape-deforming member (400) is provided at a distal end thereof. The shape-deforming member (400) is located inside the chamber (200), but is not directly connected to the chamber (200) and is connected to the main body (100) only by the support member (300), so that it can have a fixed position regardless of movement of the chamber (200).

Specifically, when the chamber (200) moves axially inside the main body (100), the shape-deforming member (400) connected to the main body (100) through the support member (300) does not move along with the chamber (200) and maintains a fixed position. Therefore, when the chamber (200) is inserted inward of the main body (100), the shape-deforming member (400) relatively protrudes in a direction away from the chamber bottom part (240) inside the chamber (200), thereby pressurizing a bottom part of the capsule to deform the shape of the capsule.

At this time, a movement distance of the shape-deforming member (400) can be controlled by controlling a length of the support member (300).

The shape-deforming member (400) may be provided in various sizes and shapes to correspond to a deformed shape of the capsule. For example, the shape-deforming member (400) may have a flat surface that contacts the capsule so that the substance inside the capsule has a more uniform distribution and a constant height. Alternatively, the shape-deforming member (400) may comprise a protrusion (410) or a recess (not shown) in order to deform a bottom part of the capsule into a specific shape. The protrusion (410) may be configured in various forms, for example, circular, triangular, polygonal, or a plurality of straight lines extending outward from a center, and the like. In particular, when the protrusion (410) has a triangular shape, the shape of the capsule bottom part can be more stably deformed.

In addition, the shape-deforming member (400) may comprise a perforating member (420) for forming a hole in the bottom part of the capsule. When a hole is formed in the bottom part of the capsule by the perforating member (420), gas such as carbon dioxide formed inside can escape, and the substance for preparing a beverage can be arranged to have a uniform density and a constant height by pressurization.

If perforation is not performed by the perforating member (420), the shape is deformed in a state where the gas inside the capsule has not escaped, which may hinder smooth rearrangement of the substance for preparing a beverage, and when the deformed capsule is inserted into the beverage preparation apparatus, there is a problem that a perforating member mounted in the beverage preparation apparatus cannot properly perforate the capsule due to the shape deformation of the capsule.

A shape of the perforating member (420) may be a general shape of a perforating member in the art, and may be provided in one or a plurality. For example, it may be provided in 1 to 5, and preferably in 3.

In a more preferred embodiment, the apparatus for deforming the shape of a capsule of the present disclosure may further comprise an elastic member (500) between the main body (100) and the chamber (200). At this time, the elastic member (500) is preferably an elastic member that exerts a force in a direction in which the main body (100) and the chamber (200) move away from each other, and a spring is most preferable.

Specifically, it is preferable that one end of the elastic member is positioned at an inner bottom part of the main body (100), and the other end is positioned at the chamber bottom part (240). In particular, as shown in FIGS. 6 and 7, the elastic member (500) may be disposed to surround the support member (300) so as to be stably fixed inside the main body

(100).

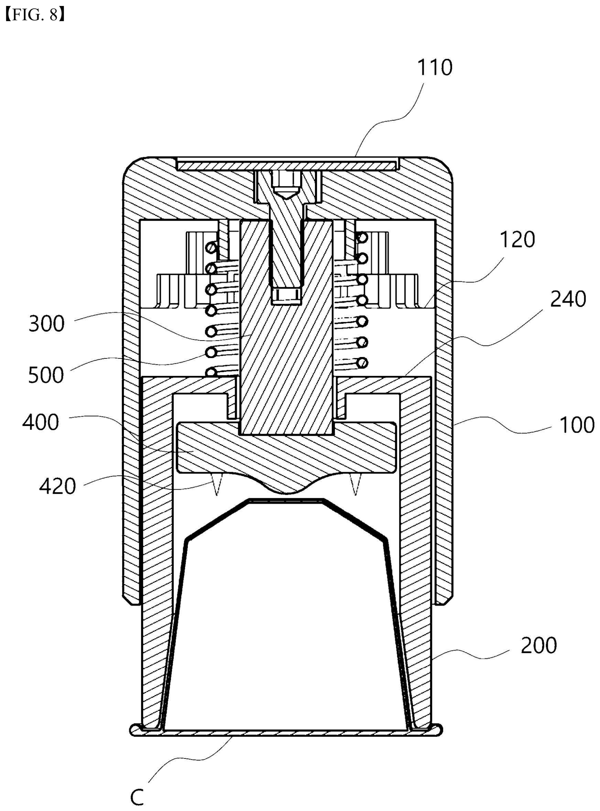

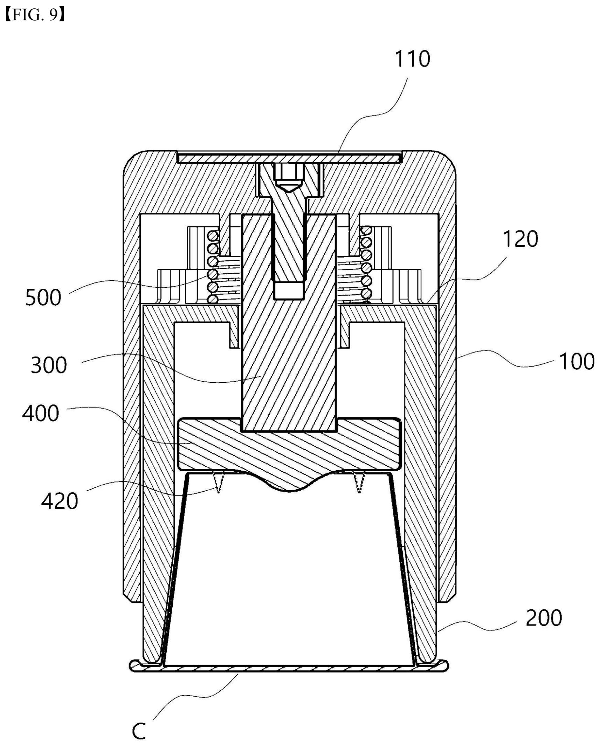

FIGS. 8 and 9 are cross-sectional views before and after deforming a shape of a capsule using a capsule shape-deforming member according to an exemplary embodiment of the present disclosure.

Referring to FIG. 8, the chamber (200) is located at a position farthest from the inner bottom of the main body (100) by a pushing force of the elastic member (500). At this time, since a shape-deforming member (400) is fixed at a distal end of the support member (300), the support member (300) cannot completely escape from the insertion hole (230) of the chamber (200), thereby preventing the chamber (200) from being separated from the main body (100).

The capsule is fixed in a structure in which a flange part of the capsule is pressed and fixed by the capsule insertion port (210), and additionally, shaking is prevented by the capsule support part (220).

When the consumer presses the pressing part (110), the elastic member (500) is compressed, and the chamber (200) is inserted inward of the main body (100). At this time, positions of the support member (300) and the shape-deforming member (400) advance toward the capsule along the main body (100), so that the shape-deforming member (400) pressurizes a bottom part of the capsule to deform the shape of the capsule.

At least one stoppers (120) are provided inside the main body (100) to prevent the chamber (200) from being excessively inserted inward of the main body (100) and to allow the capsule to be pressurized only to a desired degree so that it is deformed into an intended shape.

In the present disclosure, a final movement distance of the shape-deforming member (400) can be controlled by adjusting a length of the support member (300), a distance between the stopper (120) of the main body (100) and the chamber bottom part (240), or a maximum compression thickness of the elastic member (500), and accordingly, the capsule can be deformed into a desired shape.

When pressure is applied to the capsule by the shape-deforming member (400), the capsule is deformed into a predetermined shape. The predetermined shape may mean, for example, that a bottom part (11) of the capsule is deformed, but shapes of a side wall part (12) and a flange (13) are not deformed.

In the present disclosure, the "deformation of shape" means that a predetermined part is deformed into a predetermined shape in advance by the apparatus for deforming the shape of a capsule of the present disclosure, and that deformation is performed in the same manner even if pressurization is repeated. Here, "in the same manner" means that the capsule is deformed at an intended part, and does not mean that a shape of the capsule after deformation must be completely identical every time. It also does not mean only a completely deformed state until the area to be deformed is deformed as much as possible, but also includes a process of being deformed toward a shape that can be deformed as much as possible. That is, it means a state in which an empty space inside the capsule is completely removed and completely filled with a substance for preparing a beverage so that it cannot be further deformed.

In the present disclosure, the deformation of the capsule shape is a deformation in a direction in which a volume inside the capsule is reduced. By the deformation of the shape, the internal volume of the capsule may be reduced by 1 to 20%, preferably 3 to 18.5%, and more preferably 8 to 14%. When the shape of the capsule body is deformed within the above range, the empty space inside the capsule can be completely removed, and the substance for preparing the beverage can be uniformly distributed.

In a preferred embodiment of the present disclosure, the predetermined shape may mean that the bottom part is folded toward the inside of the capsule so that a height of the bottom part is lowered. At this time, it is preferable that a shape and a height of the side wall part are maintained as they are. In the present disclosure, by the deformation of the capsule shape, the height of the bottom part may become zero or lower than zero.

In this aspect, a thickness by which the shape-deforming member (400) pressurizes the capsule in the apparatus for deforming the shape of a capsule of the present disclosure may be 2 to 8 mm, preferably 4 to 6 mm, and more preferably 4.5 to 5.0 mm.

It is preferable that the apparatus for deforming the shape of a capsule of the present disclosure is designed in a structure such that only a shape of a bottom part of the capsule is changed while other parts, such as a side wall part, are not deformed.

In one exemplary embodiment of the present disclosure, the shape-deforming member (400) may be an elastic body or may partially comprise an elastic material. By providing the shape-deforming member (400) as an elastic body or comprising a part of an elastic material, it is possible to prevent excessive force from being transmitted to the capsule and to deform the capsule into a desired shape.

A capacity of the capsule usable in the present disclosure is not particularly limited, but may be selected within 3 to 20 g and can be applied to any capsule. Preferably, it may be used in a large-capacity capsule of 8 to 12 g to provide extraction quality that could not be provided in conventional large-capacity capsules.

In particular, in the case of conventional beverage preparation capsules, an amount that can be extracted at one time is small, so consumers felt insufficient or had to extract and drink a number of capsules, which was inconvenient. In order to solve this, large-capacity capsules capable of accommodating about 10 g of a beverage preparation substance have been proposed. However, since the size of the capsule is large, an amount of gas discharged increases, which results in forming more empty space, and thus, yield reduction and deterioration of sensuality were more significantly generated due to the non-uniform distribution of the substance inside.

In addition, in the case of conventional large-capacity capsules, when a diameter of the capsule is increased, there was a problem that it was difficult for a liquid injected into the capsule to evenly pass through the entire diameter of the capsule due to the occurrence of channeling when passing through the internal substance. Therefore, conventional large-capacity capsules chose a strategy of keeping the diameter small while increasing the height of the capsule. However, since the internal pressure could excessively increase when the height of the capsule was high, in most cases, pressure was lowered by increasing a particle size of the internal substance. However, when the particle size of the internal substance was large, there were still problems such as the beverage not being deeply infused or requiring a long extraction time. Therefore, large-capacity capsules were difficult to utilize due to limitations in manufacture and sales.

According to the present disclosure, regardless of the size of the capsule, the substance inside the capsule can be rearranged uniformly without empty space so that the beverage can be extracted, and thus not only yield can be increased but also the original taste and aroma intended at the time of initial manufacture can be extracted as they are. Therefore, even if a diameter of a large-capacity capsule is increased, when the apparatus for deforming the shape of a capsule of the present disclosure is used to deform the capsule shape in advance and the beverage is extracted, the liquid can evenly pass through the internal substance, and due to the low height of the capsule, the particle size of the internal substance can be made small, thereby allowing the beverage to be deeply infused and extracted in a short time, and thus providing a beverage with excellent yield and sensuality as well as uniform quality.

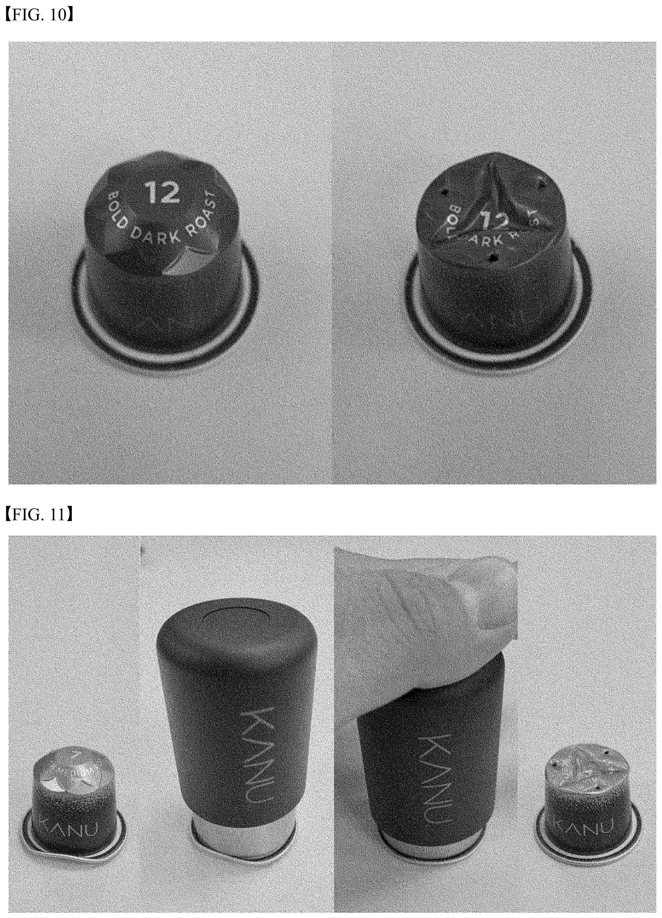

FIG. 10 is an image showing capsules before and after the shape of the capsule is deformed using the apparatus for deforming the shape of a capsule of the present disclosure. It can be seen that by the shape-deforming member (400) having a triangular protrusion (410), the bottom part of the capsule is deformed into a flat shape and perforated with a hole, while a shape of the side wall part of the capsule and the like is maintained.

In addition, conventional beverage preparation apparatuses generally have a structure in which a capsule insertion port is formed similar to an external shape of a capsule, so that when an external shape of the capsule is deformed, insertion into the insertion port is difficult, or insertion into a chamber inside the apparatus is difficult. Therefore, when a flange part of a capsule is bent or an external shape is damaged during distribution, insertion into the beverage preparation apparatus is difficult or, even if inserted, extraction is not properly performed.

When the apparatus for deforming the shape of a capsule of the present disclosure is used, since a flange of the capsule is pressed by the capsule insertion port (210) in the process of deforming the shape of the capsule, a bent part of the flange can be restored, and since the capsule support part (220) is formed in a shape corresponding to the side wall part of the capsule, deformation of the side wall part of the capsule can also be restored.

FIG. 11 is an image showing a process of restoring a capsule whose flange is bent and which is difficult to insert into a conventional beverage preparation apparatus, using the apparatus for deforming the shape of a capsule of the present disclosure. It can be seen that in the process of deforming the bottom part of the capsule into a flat shape using the apparatus for deforming the shape of a capsule of the present disclosure, the bent part of the flange is restored.

The apparatus for deforming the shape of a capsule of the present disclosure may further comprise a holder on which the apparatus can be mounted.

In this aspect, the present disclosure also relates to a set for deforming the shape of a capsule comprising an apparatus for deforming the shape of a capsule for deforming a shape of a capsule in advance before the capsule is inserted into a beverage preparation apparatus; and a holder on which the apparatus for deforming the shape of a capsule can be mounted.

The holder may be provided with a groove corresponding to a size of the capsule insertion port (210) of the apparatus for deforming the shape of a capsule, so that when the apparatus for deforming the shape of a capsule is not in use, a part of the capsule insertion port (210) is inserted into the groove to be stably mounted and to be stored so that a user is not injured by the perforating member (420).

In addition, when deforming a shape of a capsule, the capsule can be positioned in the groove and the apparatus for deforming the shape of a capsule can be used to deform the shape of the capsule, so that the shape of the capsule can be more stably deformed, and contamination of a cover of the capsule and the like can be prevented, which is also preferable in terms of hygiene.

The holder may further comprise a capsule groove for storing capsules. When configured in this way, the apparatus for deforming the shape of a capsule and capsules can be stored together, which is convenient to use, and the shape of the capsule can be deformed directly using the apparatus for deforming the shape of a capsule while the capsule is placed in the capsule groove, which is convenient.

A size and shape of the holder are not particularly limited as long as the holder can perform the functions as described above, and may be freely selected in consideration of design elements.

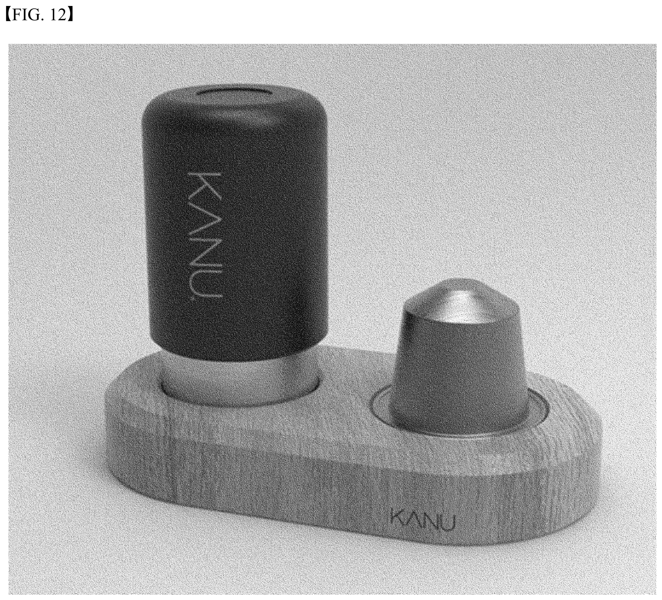

FIG. 12 is an image of a capsule shape-deforming member and its holder according to an embodiment of the present disclosure. The holder of FIG. 12 has grooves corresponding respectively to the capsule shape-deforming member and a flange size of the capsule, thereby enabling these to be easily mounted.

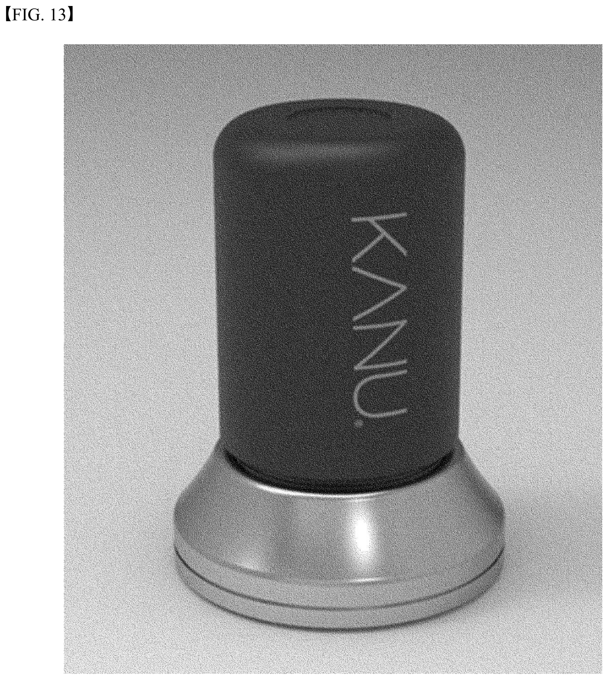

FIG. 13 is an image of a capsule shape-deforming member and its holder according to another embodiment of the present disclosure. The holder according to FIG. 13 is not provided with a groove for mounting a capsule, and is configured to simply mount only the capsule shape-deforming member, and emphasizes a design aspect so as to give consumers aesthetic satisfaction.

From the above description, those skilled in the art to which the present disclosure pertains will understand that the present disclosure can be implemented in other specific forms without changing its technical spirit or essential characteristics. In this regard, the embodiments described above should be understood to be illustrative in all respects and not limiting. The scope of the present disclosure should be construed to include all changes or modifications derived from the meanings and scope of the claims described later and their equivalent concepts, rather than the above detailed description.

### [Explanation of Referenced Numeral]

10 : Capsule body
11 : Bottom part
12 : Side wall part
13 : Flange
100 : Main body
110 : Pressing part
120 : Stopper
200 : Chamber
210 : Capsule insertion port
220 : Capsule support part
230 : Insertion hole
240 : Chamber bottom part
300 : Support member
400 : Shape-deforming member
410 : Protrusion
420 : Perforating member
500 : Elastic member
C : Capsule

## Claims

1. An apparatus for deforming the shape of a capsule comprising
a main body having a space therein in which a chamber can be accommodated and having an opening formed therein;
a chamber, which is arranged to be movable in an axial direction while partially inserted through the opening of the body, having a capsule insertion port formed to insert and accommodate at least a part of the capsule, and an insertion hole into which a support member can be inserted;
a support member protruding inside the main body and extending to the inside of the chamber; and
a shape-deforming member formed at a distal end of the support member for deforming the shape of the capsule by pressurizing the capsule.

2. The apparatus for deforming the shape of a capsule according to claim 1, wherein the apparatus is for deforming the shape of a capsule in advance before the capsule is inserted into a beverage preparation apparatus.

3. The apparatus for deforming the shape of a capsule according to claim 1, wherein the main body comprises a pressing part that can be pressed by a user, and the capsule is pressurized by a force with which the user presses the main body.

4. The apparatus for deforming the shape of a capsule according to claim 1, wherein an inner surface of the chamber comprises a capsule support part having an inner diameter that gradually decreases.

5. The apparatus for deforming the shape of a capsule according to claim 1, wherein the shape-deforming member comprises a protrusion or a recess.

6. The apparatus for deforming the shape of a capsule according to claim 1, wherein the shape-deforming member comprises a perforating member for forming a hole in the capsule.

7. The apparatus for deforming the shape of a capsule according to claim 1, wherein the shape-deforming member comprises an elastic material.

8. The apparatus for deforming the shape of a capsule according to claim 1, further comprising an elastic member between the main body and the chamber.

9. The apparatus for deforming the shape of a capsule according to claim 8, wherein the elastic member exerts an elastic force in a direction in which a distance between the main body and the chamber becomes larger.

10. The apparatus for deforming the shape of a capsule according to claim 1, wherein the deformation of the shape is a deformation in a direction in which a volume inside the capsule is reduced.

11. The apparatus for deforming the shape of a capsule according to claim 1, wherein a volume inside the capsule is reduced by 1 to 20% by the deformation of the shape.

12. The apparatus for deforming the shape of a capsule according to claim 1, wherein the deformation of the shape is such that only a shape of a bottom part of the capsule is deformed while a shape of a side wall part of the capsule is maintained.

13. The apparatus for deforming the shape of a capsule according to claim 1, further comprising a holder having a groove corresponding to a size of the capsule insertion port, wherein apparatus for deforming the shape of a capsule can be mounted on the groove.

14. The apparatus for deforming the shape of a capsule according to claim 1, wherein an inner side of the main body is provided with a groove-shaped guide, and an outer surface of the chamber is provided with a protrusion configured to be movable along the guide.

15. The apparatus for deforming the shape of a capsule according to claim 1, wherein an inner side of the main body is provided with a protrusion, and an outer surface of the chamber is provided with a groove-shaped guide in which the protrusion is inserted so as to be movably disposed.

16. A method for deforming the shape of a capsule comprising the steps of:
providing a capsule;
inserting the capsule into a capsule insertion port of the apparatus for deforming the shape of a capsule according to any one of claims 1 to 15; and
pressing the main body of the apparatus to cause the shape-deforming member to pressurize the capsule, thereby deforming the shape of the capsule.

17. A set for deforming the shape of a capsule comprising
an apparatus for deforming the shape of a capsule for deforming the shape of a capsule in advance before the capsule is inserted into a beverage preparation apparatus, and
a holder on which the apparatus can be mounted;
wherein the apparatus comprises
a main body having a space therein in which a chamber can be accommodated and having an opening formed therein,
a chamber, which is arranged to be movable in an axial direction while partially inserted through the opening of the body, having a capsule insertion port formed to insert and accommodate at least a part of the capsule, and an insertion hole into which a support member can be inserted,
a support member protruding inside the main body and extending to the inside of the chamber, and
a shape-deforming member formed at a distal end of the support member for deforming the shape of the capsule by pressurizing the capsule;
wherein the holder comprises a groove on which the apparatus can be mounted.

18. The set for deforming the shape of a capsule according to claim 17, wherein the holder further comprises a capsule groove for storing a capsule.
